(19)

Europäisches
Patentamt
European
Patent Office
Office européen
des brevets

(11) **EP 1 995 811 A1**

(12) **EUROPEAN PATENT APPLICATION**

(43) Date of publication:
    26.11.2008 Bulletin 2008/48

(51) Int Cl.:
    *H01M 8/04* (2006.01)        *H01M 16/00* (2006.01)

(21) Application number: 07425326.1

(22) Date of filing: 25.05.2007

(84) Designated Contracting States:
    AT BE BG CH CY CZ DE DK EE ES FI FR GB GR
    HU IE IS IT LI LT LU LV MC MT NL PL PT RO SE
    SI SK TR
    Designated Extension States:
    AL BA HR MK RS

(71) Applicant: Electro Power Systems S.p.A.
    10091 Alpignano (IT)

(72) Inventors:
    • Cherchi, Pierpaolo
      10141 Torino (IT)

    • Borello, Luisa
      10093 Collegno (IT)
    • Musso, Andrea
      10095 Grugliasco (IT)
    • Gianolio, Giuseppe
      14010 Cellarengo (IT)

(74) Representative: Jorio, Paolo et al
    STUDIO TORTA
    Via Viotti 9
    10121 Torino (IT)

(54) **Method for purging pem-type fuel cells**

(57)    Method for purging water or another fluid from one or both the anode and cathode compartments of a fuel cell stack (S), wherein the stack is hydraulically connected to a source of reagents and to an outlet conduit, which is in its turn connected to an element selected from the group consisting of draining means and recirculation means; and wherein at least one flow of reagents regulated by adequate regulating means is sent from said source to the stack to produce electric power to be supplied to a user, characterised by comprising the steps of:
a) interrupting the withdrawal of current from the fuel cell stack and to the electric user, by feeding the latter by means of an auxiliary source of electric energy such as to satisfy, on its own, the electric energy requirements of said user; and, simultaneously
b) continuing to feed said flow of reagents to the stack, until the achievement of the purging to a desired extent of said stack.

Fig. 1

**Description**

The present invention generally refers to a fuel cell system for the generation of electric power, wherein a plurality of fuel cells are piled into a stack to generate electricity by being supplied a combustible gas and an oxidising gas, on a fuel electrode (anode) and an oxidation electrode (cathode) respectively. More particularly, the present invention refers to a method for purging fuel cells of the Proton Exchange Membrane (PEM) type.

Fuel cells represent one of the most technologically promising solutions for the use of hydrogen as an energy vector. They are devices capable of converting chemical energy into electric energy. The major advantages entailed by the use of fuel cells are high efficiency, versatility and virtually null environmental impact. The product of the electrochemical reaction used for the production of electric, in fact, is non polluting: e.g., in the case of hydrogen-supplied fuel cells, it is water.

In a single PEM cell there take place simultaneously two hemi-reactions, at the anode and at the cathode respectively. To such purpose, anode and cathode of a PEM fuel cell are separated by an electrolyte, typically consisting of a membrane of a sulphonated polymer capable of conducting protons, whose opposite sides are coated with a layer of a suitable catalytic mixture (e.g. Pt-based). The electrolyte is generally saturated with an ionic transport fluid (e.g. water) so that hydrogen ions can travel thereacross from anode to cathode.

At the anode, then, there is supplied hydrogen which diffuses within the catalytic layer and there dissociates into hydrogen ions and electrons, according to the hemi-reaction equation:

$$(1) \qquad 2H_2 \rightarrow 4H^+ + 4e^-$$

Electrons, to which the membrane is impermeable, travel along an external electric circuit towards the cathode, thereby generating an electric current and the corresponding voltage.

At the cathode there is supplied an oxidant, generally oxygen or a gaseous mixture containing oxygen (e.g. air) which reacts with the hydrogen ions which have travelled across the electrolyte and the electrons coming from the external electric circuit to form water, according to the hemi-reaction equation:

$$(2) \qquad O_2 + 4H^+ + 4e^- \rightarrow 2H_2O$$

This reaction is generally also catalytically assisted, e.g. by Pt.

The resulting overall reaction is consequently:

$$(3) \qquad 2H_2 + O_2 \rightarrow 2H_2O$$

which comes with the development of heat and electric energy.

A well defined maximum voltage is associated with this electrochemical reaction. In order to achieve higher voltages, a plurality of elements are connected in series to form a stack. It is also possible to use different stacks connected in series.

As regards anode gases, a stack can normally be managed according to three different operation modes:

- anode side outlet open;
- anode side outlet closet ("dead end");
- recirculation at the anode side;

This last operation mode is not generally used when the anode gas does not consist of pure hydrogen.

Similarly, the operation modes listed above can be employed at the cathode side, when the gas being fed is pure oxygen or an oxygen-containing mixture (e.g. air). In case an oxygen-containing mixture is used, however, the "dead end" operation mode is not recommended.

The ionic conductivity of a fuel cell, i.e. its capability of transporting hydrogen ions through the membrane, depends on the degree of hydration of the membrane itself. Preferably, the membrane is maintained under conditions at least close to saturation with absorbed water, and this very same water is responsible for conducting hydrogen ions across the membrane.

In order to achieve the desired degree of saturation, the anode compartment is kept preferably under a condition which is very close to 100% relative humidity. However, under these conditions, water will tend to condensate.

This water has to be periodically removed so as to avoid that an undesired build-up thereof compromise the correct operation of the fuel cell. An excessive amount of water in the anode compartment can as a matter of fact reduce the efficiency of the fuel cell because water molecules substantially obstruct the anode reactive sites and prevent hydrogen ions from reaching the membrane and being transported across the same.

In the cathode compartment, water is present to a larger extent as it is a secondary product of the reaction taking place at the cathode. Besides, since a PEM type fuel cell works at temperatures below the boiling point of water, this water can be accumulated in the liquid state. Further, the passage of the same hydrogen ions through the membrane tends to drag water molecules across the membrane itself, thus resulting in a possible further build-up of liquid water in the cathode compartment.

When a condition of "flooding" occurs in the cathode compartment and water droplets prevent oxygen molecules from reaching the cathode, the very operation and efficiency of the fuel cell are compromised.

There exists therefore the need to remove water from the fuel cell.

In the "dead end" operation modes, water is generally removed through periodic purging of one of the anode and cathode compartments through purge valves provided for such purpose. When operating with a recirculation, normally a periodic and/or continuous purge is resorted to. Through purge valves, which are opened for a brief time, the gases contained within the compartment being purges are also expelled together with the accumulated water.

Generally, the purge procedure is temporised, i.e. it is initiated when a predetermined amount of time has elapsed since the previous purge operation. Further, there is generally provided a pressure control (in particular in the case of "dead end" mode operation) which initiates the purge procedure in case pressure within at least one fuel cell in the stack rises beyond a certain predetermined threshold value. Thus it is possible to avoid over-pressures which can be dangerous for the membranes of PEM fuel cells.

In the case of stacks working with the anode side outlet open, i.e. with the flow of fuel controlled at the inlet by setting a predetermined flow rate value, the purge procedure is generally initiated, besides by temporisation, based on a control mode monitoring the voltage of the single fuel cells. When the voltage of a fuel cells tends to decrease, as a matter of fact, a possible reason is the condensation of water within the internal channels and the consequent undesired accumulation thereof. Similarly to what is done in "dead-end" operation mode with the pressure control described above, therefore, it is possible to render the purge procedure initiation automatic through a system that controls the voltage of the stack fuel cells.

There have been proposed several solutions for performing the purge, depending on the different configurations under which the fuel cell stack can be operated.

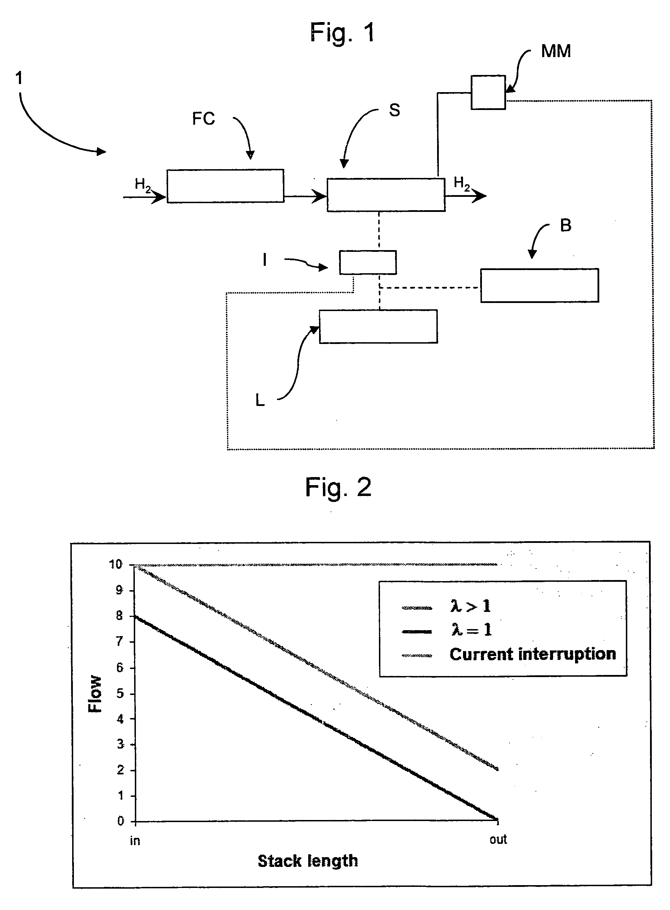

If the stack works with the anode compartment outlet open and with the inlet flow regulated through a control performed upstream with respect to the stack (Figure 1), in order to remove water the inlet flow rate is generally briefly increased, thus causing an increase in the head loss across the stack. From the operational point of view, it is therefore necessary to change, even if only for a very brief time, the flow rates in the whole system.

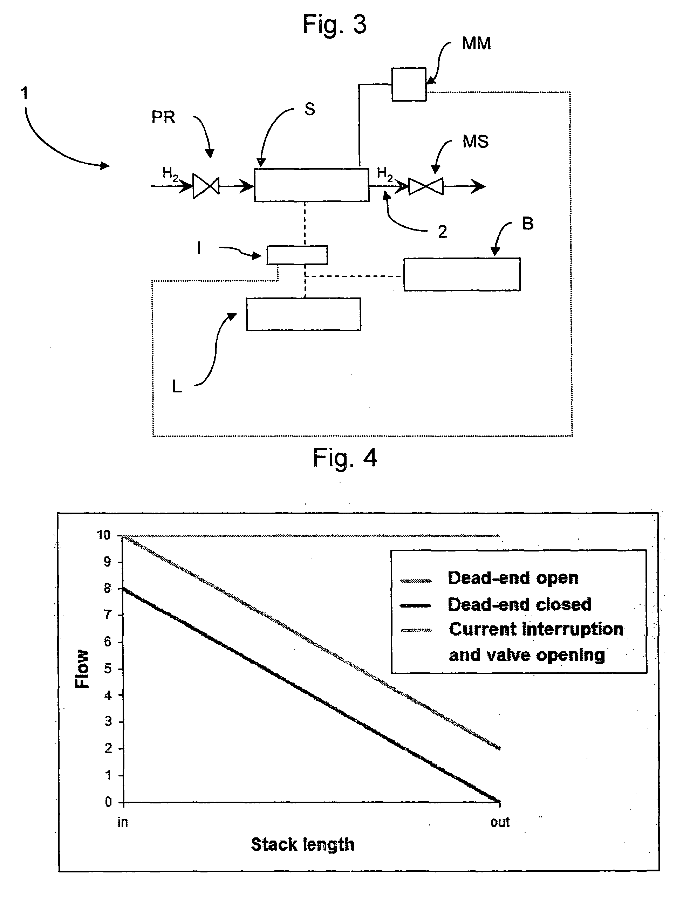

If the stack is operated in the so-called "dead-end" mode, i.e. with the outlet closed, the pressure value at the inlet is set, e.g. through a pressure reducing valve upstream with respect to the stack itself (Figure 3). With a view to avoiding the accumulation of water and inert products, since under conditions of maximum electric load the whole flow of hydrogen entering is consumed, it is known to perform the purge operation by opening the outlet so that for a brief time the inlet pressure is increased.

If, on the one hand, the stack purge is thus effectively performed, on the other hand this procedure results disadvantageously in a greater stress upon the fuel cell membranes and entails the need to use pressure reducing valves particularly stable and precise.

If, finally, the stack is operated with a recirculation of the excess reactants, the higher the electric consumption the lower the portion of hydrogen flow crossing the stack, and consequently the lower the head loss. In the case of water build-up, under those operating conditions, purge is normally performed by increasing the inlet flow through an increase of the flow-rate of the fan used for the recirculation. There exists however a limitation in that sense, which depends on the power, geometry and size of the fan, to which a maximum power value univocally corresponds, said value being possibly not sufficient for purging adequately the stack. Further, to perform the purge by acting on the fan flow-rate, it is necessary that the overall system of the fuel cell generator be provided with a control system suitable for controlling adequately the flow exiting from the fan.

In any of the above cases, according to the known art, the purge action demands however that the so-called "Balance of Plant" (BoP) of the system, i.e. ensemble of hydraulic circuit (pump, piping, dissipators, etc.), gaseous currents feed and discharge circuit (hydrogen feed piping, air feed piping, etc.), control system (control unit, temperature, flow and pressure gauges, actuators, etc.) be modified. Alternatively, it is necessary to modify the operating conditions (flow rates, pressures, etc.) under which the whole system, and particularly the BoP, is operated.

Finally, according to the known art, in order to perform the purge operations, it is generally necessary to act upon the flow rates fed to the stack, or on the values of pressure set at the stack inlet, thus rendering even more complex the system through the introduction of a further control system, or further thus subjecting the very components of the system to operating conditions which can compromise the working efficiency and/or durability thereof (e.g. higher pressure values) or by resorting to oversizing certain components (e.g the fan).

It is an object of the present invention to provide a method for performing the purge of a fuel cell stack which overcomes the above drawbacks.

According to the present invention there is provided a purging method for the stack of a fuel cell electric generator which does not entail the introduction of structural complications in the system, nor the operation of the system itself under conditions that are more critical for the components thereof, nor the need to oversize any of its constituent elements.

The invention is therefore relative to a purging method according to claim 1.

In particular, according to the present invention, there is provided a method for purging water or other fluid from one or both the anode and cathode compartments of a fuel cell, wherein the stack is hydraulically connected to at least a source of reactants and to an outlet conduit, which is in its turn connected to an element selected from the group consisting of draining means and recirculation means; and wherein at least a flow of reactants regulated through adequate regulation means is sent from said source to the stack to produce electric power to be fed to a user. According to an aspect of the present invention, the method comprises the steps of:

a) interrupt the withdrawal of current from the fuel cell stack towards said electric user by feeding the latter by means of an auxiliary source of electric power such as to satisfy, on its own, the electric power requirements of said user; and, simultaneously

b) continue to feed said flow of reactants to the stack,

until the achievement of the purging to a desired extent of said stack.

It is another object of the present invention to provide a fuel cell system that enables to perform the purge of the stack so as to overcome the drawbacks described above.

According to the present inventions there is therefore provided a fuel cell system which allows the performing of purging without entailing the operation under operating conditions that are critical for its components, nor the need to oversize any of its constituent elements.

The invention is therefore related to a fuel cell system according to claim 9.

In particular, according to the present invention, there is provided a fuel cell system comprising:

- a stack of fuel cells that can be fed with at least one reactant, e.g. hydrogen, the stack having at least an inlet and an outlet and being designed so as to satisfy the electric requirements of at least an electric user;
- a source of said at least one reactant hydraulically connected to the inlet of the stack to supply towards the same a flow of said at least one reactant;
- an outlet conduit connected to the stack exit;
- monitoring means suitable for monitoring the occurrence of a condition for which the purging of the stack must be performed;

characterised by comprising, further:

- an auxiliary source of electric power; and
- command means to regulate the withdrawal of electric power by the electric user from the stack and/or the auxiliary source of electric power without interrupting the supply of the reactant flow towards said stack.

Further characteristics and advantages of the present invention will become apparent from the following description of some non limitative embodiments thereof, which is given with reference to the figures of the attached drawings, wherein:

Figure 1 is a layout representing a first purge configuration of a fuel cell stack according to the method of the present invention;

Figure 2 is a diagram showing the qualitative trend of the flow with respect to a geometric coordinate running along the thickness of the stack in the purge configuration of figure 1;

Figure 3 is a layout representing a second purge configuration of a fuel cell stack according to the method of the present invention;

Figure 4 is a diagram showing the qualitative trend of the flow with respect to a geometric coordinate running along the thickness of the stack in the purge configuration of figure 3;

Figure 5 is a layout representing a third purge configuration of a fuel cell stack according to the method of the present invention;

Figure 6 is a diagram showing the qualitative trend of the flow with respect to a geometric coordinate running along the thickness of the stack in the purge configuration of figure 5; and

Figure 7 is a diagram showing the qualitative trend over time of: generated electric power; head loss across the stack; and stack outlet flow; in the purge phase performed according to the method of the present invention

In figure 1 there is illustrated a stack (S) of a fuel cell generator to which a flow of at least a reactant is fed, in this case of a fuel, e.g. hydrogen, regulated at the inlet by a flow controller of a blower (FC) of a type known to the person skilled in the art and therefore not described. The stack (S) is electrically connected to a load consisting of an electric user (L) by means of an electric line provided of means (I) of switching or power conditioning, e.g. consisting of a switch or a power conditioner (T). According to the invention, the electric user (L) can be fed selectively or simultaneously by the stack (S) and by an auxiliary source consisting of e.g. batteries (B) of a known type or, as an alternative, by capacitors dischargeable in a controlled manner, through activation of the means of switching or power conditioning (I), which come thus to represent means for commanding the withdrawal of electric power by the electric user from the stack and/or the auxiliary source of electric power.

Such commanding means, in general, will be controlled, according to the invention, by monitoring means (MM) of the instant condition of the stack (S), which are capable of detecting the need to perform a purge, said means also well known to the person skilled in the art and which therefore are not described in detail for the sake of simplicity.

Under conditions of free exit from the stack (S) as the one illustrated, if the flow of hydrogen is controlled at the inlet, the pressure at the inlet of the stack (S) is equal to the sum of atmospheric pressure plus a term depending on both the flow set by the controller (FC) at the inlet and the electric current delivered to the load defined by the electric user (L).

At electric load equal to zero, the entire flow of hydrogen fed at the inlet crosses and exits the stack thus determining, for each value of flow set by the controller at the inlet, a maximum inlet pressure. With respect to this value, pressure decreases with the increase of the electric load.

The limit condition is that for which the entire flow is consumed (stoichometric coefficient $\lambda=1$): in that case the outlet flow is null and, similarly, null is the velocity of the hydrogen flow at the rear of the stack

The qualitative trend of the hydrogen flow as a function of a geometric coordinate running along the thickness of the stack, in the configuration of figure 1, is shown in figure 2.

In order to remove the possible build-up of water, it would be necessary, according to the known art, to increase for a time fraction the flow and the head loss.

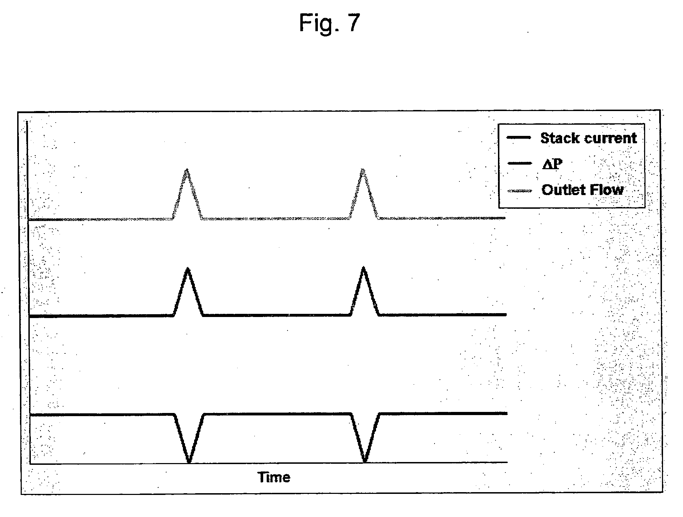

According to the method of the invention, it is instead sufficient, under the control of the monitoring means (MM), to interrupt the withdrawal of current from the stack (S) by the electric load (L) for a predetermined time, so that the integral of power with respect to time be easily temporarily made up electrically (through the intervention of the batteries (B) or by means of the discharge of a capacitor), while keeping at the same time unchanged the flow of fuel directed to the stack (S). In figure 7 there is shown a qualitative chart of the trend of the outlet flow and of the head loss in correspondence with a succession of interruptions of the withdrawal of current from the stack.

As can be seen from figure 2, the interruption of the withdrawal of electric current causes, for each value of flow set by the controller, an increase in the hydrogen flow crossing and exiting the stack, with a consequent increase in the pressure at the inlet. This, surprisingly, has proved sufficient to cause the desired purge of the stack, thus allowing to overcome the drawbacks of the prior art.

According to a possible first embodiment of the method according to the invention, the purge operation will be interrupted by the intervention of a temporizer after a predetermined amount of time adequate to ensuring the completion of the purge of the stack to the desired extent.

According to another embodiment of the method according to the invention, the purge operation will be interrupted upon indication in feedback of the monitoring means (MM), once the purge has been completed to the desired extent. For instance, said monitoring means(MM) can comprise pressure gauges capable of detecting that, following the purge operation the pressure within the stack has been brought back below a predetermined threshold value, or means that measure the voltage available at the stack capable of checking that such value has been brought back above a predetermined value.

In figure 3 there is schematically illustrated the stack (S) of a fuel cell generator in the so called "dead-end" operating mode, i.e. which is operated with the outlet of the anode compartment normally closet by drain means (MS); the rest of the layout is identical to that formerly described in figure 1 and the details similar or equal to those already described are indicated for the sake of simplicity by the same references.

The stack (S) inlet pressure is set by means of suitable valve means (PR) e.g. consisting of a suitable pressure reducing valve.

During the stack operation, the flow of hydrogen is entirely consumed ($\lambda=1$), therefore it is essential to open periodically the stack outlet so as to perform the purge thereof.

With the stack outlet open, the flow entering the stack is guided by the pressure set at the inlet and by the head loss across the stack, and the amount of flow (drain flow) exiting the latter is equal to the flow of hydrogen at the inlet minus the amount consumed. The flow consumed grows along with the increase of the electric load, while the purge flow decreases until it becomes null at high loads, with the risk of accumulating water and inert substances. The qualitative trend of the hydrogen as a function of a geometric coordinate running along the thickness of the stack, in the configuration of figure 3, is shown in figure 4.

To perform the purge, the need of which is detected in a known manner by the monitoring means (MM), according to the known art it would be necessary to increase the inlet pressure, which would entail a condition of greater stress for the membranes of the fuel cells and the need to employ very stable and precise pressure reducing valves.

According to the method of the present invention it is instead sufficient, under the control of the monitoring means (MM), to interrupt the withdrawal of current from the stack (S) by the electric load (L) for a predetermined time fraction, so that the so that the integral of power with respect to time be easily temporarily made up electrically (through the intervention of the batteries (B) or by means of the discharge of a capacitor), while keeping at the same time unchanged the flow of fuel directed to the stack (S).

Thus in the fuel cell stack of Figure 3 there is set, the inlet pressure being equal, an increase in the flow crossing the stack and the purge action becomes effective even at the normal operating pressure (i.e. it is not necessary to increase the pressure at the stack inlet).

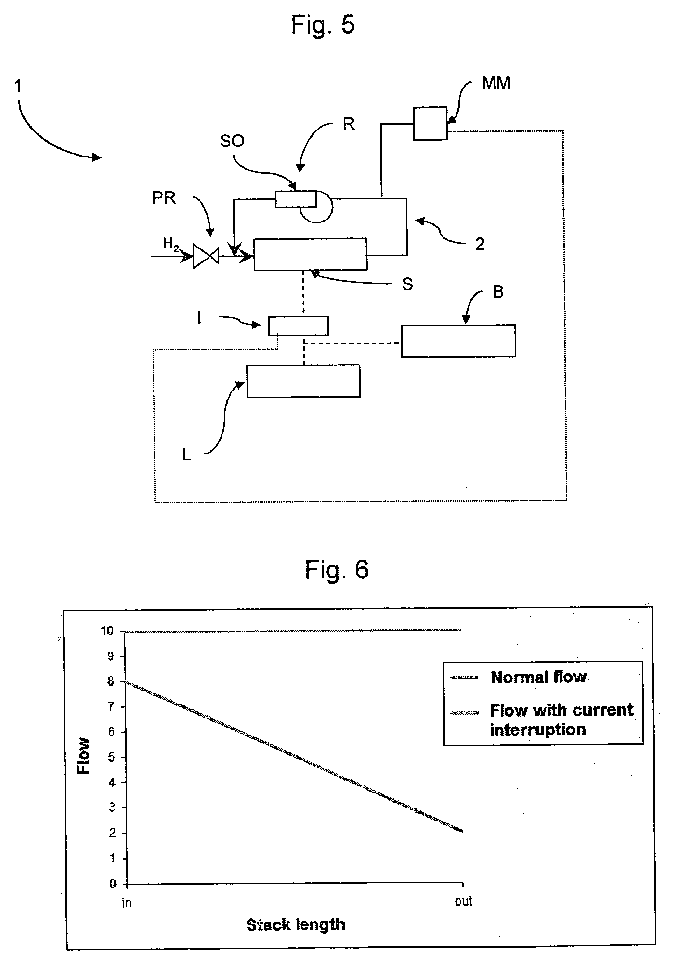

In figure 5 there is illustrated the stack (S) of a fuel cell generator working with a recirculation on the anode compartment, according to a further variation of what already described. In this configuration, the flow entering the stack (S) is greater than the flow consumed in the reaction, since it comprises the portion of flow consumed by the electrochemical reaction and the fraction of reagent recirculated through recirculation means (R) consisting of a blower (SO). Evidently, as can be inferred by a simple mass balance, the reagent fraction recirculated is equal to the fraction fed in excess. The inlet pressure is set by suitable valve means (e.g. a suitable pressure reducing valve (PR).

With the increase of the electric consumption, the flow crossing integrally the stack diminishes, with a consequent decrease of the head loss across the stack itself. It would be possible to eliminate an accumulation of water by increasing the flow to the stack, for example by increasing the flow of the blower (known art). There exists however a maximum value, imposed by geometry and power of the blower, beyond which said flow cannot be brought, this maximum value being potentially insufficient to perform the purge under certain conditions of operation and electric load.

According to the method of the present invention, also in this case it is sufficient, under the control of the monitoring means (MM), to interrupt the withdrawal of current from the stack (S) by the electric load (L) for a predetermined time fraction, so that the so that the integral of power with respect to time be easily temporarily made up electrically (through the intervention of the batteries (B) or by means of the discharge of a capacitor), while keeping at the same time unchanged the flow of fuel directed to the stack (S).

Thus, within the fuel cell stack of figure 5, the flow of hydrogen consumed becomes null and therefore the flow of hydrogen crossing the stack overall and exits is maximised. Consequently the head loss also increases significantly, thus making it possible to remove water accumulated without having to control the blower in a delicate manner and without having to oversize the blower with respect to the process demands.

From what described above it appears that the stack (S), along with the commanding means consisting of commutating means or power conditioners (I) described above, along with the auxiliary source of electric energy (B) and along with the monitoring means (MM) constitute an innovative fuel cell system (1) suitable for carry out the method according to the invention. The invention is now further described with reference to the following practical example.

Characteristics and advantages of the present invention, insofar described with reference essentially to the anode side, hold valid also in reference to the cathode side.

Example

Table 1 shows the energy values (expressed in J) which the auxiliary source of electric energy must supply to the electric load, considering for the latter several power values (1, 2, 5, 10 and 20 kW), under the assumption of interrupting for a given amount of time (1, 5, 20, 50, 100, 500 and 5000 ms) the current supply by the fuel cell stack. If the energy to be supplied to the electric load is expressed as:

$$E = \int_0^t P\,dt \qquad (4)$$

to a first approximation, by assuming to operate at constant power (load), energy can be simply be evaluated as the product of the power required by the user multiplied by the time during which the current supply from the fuel cell stack is interrupted.

**Table 1** - Energy to be supplied to the electric user at different power values, by interrupting the current supply from the fuel cell stack for given amounts of time.

| Energy [J] | | | | | |
|---|---|---|---|---|---|
| | Power [kW] | | | | |
| | 1 | 2 | 5 | 10 | 20 |
| Amount of time [ms] | | | | | |
| 1 | 1 | 2 | 5 | 10 | 20 |
| 5 | 5 | 10 | 25 | 50 | 100 |
| 10 | 10 | 20 | 50 | 100 | 200 |
| 50 | 50 | 100 | 250 | 500 | 1000 |
| 100 | 100 | 200 | 500 | 1000 | 2000 |
| 500 | 500 | 1000 | 2500 | 5000 | 10000 |
| 5000 | 5000 | 10000 | 25000 | 50000 | 100000 |

That energy can be supplied to the electric user by using different possible auxiliary sources of electric energy, e.g. condensers or batteries. In table 2 there are shown the capacity values (expressed in μF) which the condensers must possess in order to make up for the failed supply of electric energy from the stack, for the same cases shown in table 1.

**Table 2** - Capacity which the condensers must possess to make up for the interruption of current supply from the stack for the amounts of time of Table 1.

| Condensers capacity[μF] | | | | | |
|---|---|---|---|---|---|
| | Power [kW] | | | | |
| | 1 | 2 | 5 | 10 | 20 |
| Amount of time [ms] | | | | | |
| 1 | 4,134 | 8,267 | 20,668 | 41,336 | 82,672 |
| 5 | 20,668 | 41,336 | 103,340 | 206,680 | 413,360 |
| 10 | 41,336 | 82,672 | 206,680 | 413,360 | 826,720 |
| 50 | 206,680 | 413,360 | 1,033,399 | 2,066,799 | 4,133,598 |
| 100 | 413,360 | 826,720 | 2,066,799 | 4,133,598 | 8,267,196 |
| 500 | 2,066,799 | 4,133,598 | 10,333,995 | 20,667,989 | 41,335,979 |
| 5000 | 20,667,989 | 41,335,979 | 103,339,947 | 206, 679, 894 | 413,359,788 |

In a fully similar manner, in table 3 there are listed the capacity values (expressed in Ah) which the batteries must possess to make up for the failed electric energy supply from the fuel cell stack for the same cases shown in table 1.

**Table 3 -** Capacity which the batteries must possess make up for the interruption of current supply from the stack for the amounts of time of Table 1.

| Batteries capacity [Ah] | | | | | |
|---|---|---|---|---|---|
| | Power [kW] | | | | |
| | 1 | 2 | 5 | 10 | 20 |
| Amount of time [ms] | | | | | |

(continued)

| Batteries capacity [Ah] | | | | | |
|---|---|---|---|---|---|
| | Power [kW] | | | | |
| | 1 | 2 | 5 | 10 | 20 |
| 1 | 0,001 | 0,001 | 0,003 | 0,006 | 0,012 |
| 5 | 0,003 | 0,006 | 0,014 | 0,029 | 0,058 |
| 10 | 0,006 | 0,012 | 0,029 | 0,058 | 0,116 |
| 50 | 0,029 | 0,058 | 0,145 | 0,289 | 0,579 |
| 100 | 0,058 | 0,116 | 0,289 | 0,579 | 1,157 |
| 500 | 0,289 | 0,579 | 1,447 | 2,894 | 5,787 |
| 5000 | 2,894 | 5,787 | 14,468 | 28,935 | 57,870 |

**Claims**

1. Method for purging water or another fluid from one or both the anode and cathode compartments of a fuel cell stack (S), wherein the stack is hydraulically connected to a source of reagents and to an outlet conduit, which is in its turn connected to an element selected from the group consisting of draining means and recirculation means; and wherein at least one flow of reagents regulated by adequate regulating means is sent from said source to the stack to produce electric power to be supplied to a user, **characterised by** comprising the steps of:

   a) interrupting the withdrawal of current from the fuel cell stack and to the electric user, by feeding the latter by means of an auxiliary source of electric energy such as to satisfy, on its own, the electric energy requirements of said user; and, simultaneously
   b) continuing to feed said flow of reagents to the stack,

   until the achievement of the purging to a desired extent of said stack.

2. Method according to claim 1, **characterised in that** there are used regulating means (FC,PR) selected from the group consisting of flow controllers, pressure regulators or pressure reducing valves.

3. Method according to claim 1 or 2, **characterised in that** there are used recirculation means (R) selected from the group consisting of recirculation blower and recirculation pump.

4. Method according to any of the foregoing claims, **characterised in that** there is used an auxiliary source (B) of electric power selected from the group consisting of batteries, capacitors.

5. Method according to any of the foregoing claims, **characterised in that** the outlet flow exiting the stack is regulated by means of draining means (MS) consisting of valve means.

6. Method according to any of the foregoing claims, **characterised in that** said steps a) e b) are performed when said monitoring means (MM) selected from the group consisting of pressure controllers, temporizers, voltage controllers, detect the need to perform a purge.

7. Method according to any of the foregoing claims, **characterised in that** said steps a) e b) are interrupted after a predetermined amount of time set by temporizers.

8. Method according to any of the foregoing claims, **characterised in that** said steps a) e b) are interrupted upon indication of the monitoring means (MM) in feedback.

9. Fuel cell system (1) comprising:

   - a fuel cell stack that can be fed with at least a reagent, e.g. hydrogen, the stack having at least an inlet and an output and being designed to satisfy the electric requirements of at least an electric user (L);
- a source of said at least one reagent hydraulically connected to the stack inlet to deliver towards the latter a flow of said at least one reagent;
- an outlet conduit connected to the stack outlet;
- monitoring means (MM) suitable for monitoring the occurrence of a condition due to which purge of the stack must be carried out;

**characterised in that** it comprises, further:

- an auxiliary source of electric power; and
- command means for regulating the withdrawal of electric power by the electric user from the stack and/or the auxiliary source of electric power without interrupting the delivery of the flow of fuel towards said stack.

10. System according to claim 9, **characterised in that** said regulating means (FC, PR) are selected from the group consisting of flow controllers, pressure regulators or pressure reducing valves.

11. System according to claim 9 or 10, **characterised in that** said outlet conduit (2) is hydraulically connected to drain means (MS).

12. System according to claim 9 or 10 **characterised in that** said outlet conduit is hydraulically connected to recirculation means (R).

13. System according to claim 12, **characterised in that** said recirculation means (R) comprise a recirculation blower (SO).

14. System according to any of claims 9 to 13, **characterised in that** said monitoring means (MM) are selected from the group consisting of temporizers, pressure controllers.

15. System according to any of claims 9 to 14, **characterised in that** said auxiliary source (B) of electric power consists of batteries.

16. System according to any of claims 9 to 14, **characterised in that** said auxiliary source (B) of electric power consists of capacitors.

17. System according to any of claims 9 to 16, **characterised in that** said command means (I) are selected from the group consisting of switch, commutator, interrupter, power conditioner.

## Fig. 1

## Fig. 2

## Fig. 3

## Fig. 4

## Fig. 5

## Fig. 6

Fig. 7

**European Patent Office**

**EUROPEAN SEARCH REPORT**

Application Number

EP 07 42 5326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 331 679 A (TOKYO SHIBAURA ELECTRIC CO [JP]) 30 July 2003 (2003-07-30) * paragraphs [0018], [0020] - [0023], [0031], [0032] * | 9-17 | INV. H01M8/04 H01M16/00 |
| Y | | 1-8 | |
| Y | EP 1 672 727 A (BALLARD POWER SYSTEMS [CA]) 21 June 2006 (2006-06-21) * paragraphs [0011], [0016] * ----- | 1-8 | |

TECHNICAL FIELDS SEARCHED (IPC)

H01M

The present search report has been drawn up for all claims

| Place of search | Date of completion of the search | Examiner |
|---|---|---|
| The Hague | 4 October 2007 | GONZALEZ-CUENCA, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 07 42 5326

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2007

| Patent document cited in search report | | Publication date | Patent family member(s) | | Publication date |
|---|---|---|---|---|---|
| EP 1331679 | A | 30-07-2003 | JP<br>JP<br>US | 3660629 B2<br>2003223244 A<br>2003143450 A1 | 15-06-2005<br>08-08-2003<br>31-07-2003 |
| EP 1672727 | A | 21-06-2006 | EP | 1691439 A1 | 16-08-2006 |

EPO FORM P0459

For more details about this annex : see Official Journal of the European Patent Office, No. 12/82